# EUROPEAN PATENT APPLICATION

(11) **EP 2 023 583 A1**
(43) Date of publication of application: **11.02.2009**
(21) Application number: 08160853.1
(22) Date of filing: 22.07.2008
(51) Int. Cl.: H04M 1/2745, G06F 17/30, G06F 3/048

(54) **Portable terminal and image information managing method therefor**

(30) Priority: 31.07.2007 US 952920 P
(71) Applicant: LG Electronics Inc., Yeongdeungpo-Gu Seoul (KR)
(72) Inventor: Choi, Hyun-Bo, Goyang, Gyeonggi-Do (KR); Dehamer, Matthew, San Diego, CA 9213 (US)
(74) Representative: Cabinet Plasseraud

(57) **Abstract**

A method for managing contact information by using facial images recognized on still images or videos in a portable terminal and operating a variety of functions by associating the functions with the face-recognized images, and a portable terminal implementing such method, the portable terminal including: a display module f, and a controller for displaying all individuals captured in the still images or videos by using an image of a certain shape and indicating whether or not a preset tag information for each individual is present according to a preset option, and the method including: recognizing faces of individuals captured in still images or videos, displaying each face of the face-recognized individuals by using an image of a certain shape, searching whether or not a preset tag information for each individual is present, and displaying whether or not the preset tag information for each individual is present.

## Description

### BACKGROUND OF THE INVENTION

### Field of the Invention

The present invention relates to a method for managing contact information by using facial images recognized on a still image or video in a portable terminal, and operating a variety of functions provided in the portable terminal by associating the functions with the face-recognized images, and to a computer program product and a portable terminal implementing such method.

### Description of the Background Art

A portable terminal may be configured to perform a variety of functions.

Examples of such functions may include data/voice communications, capturing images or videos via a camera, recording audio, playing music files via a speaker system, and displaying images or videos.

Some terminals have been equipped with additional functionality which supports game playing, while other terminals have been implemented as an integrated multimedia player. More recently, portable terminals have been equipped with a function of receiving broadcasts or multicast signals, thereby enabling a user to watch videos or television programs.

Efforts are ongoing to support and increase the functionality of portable terminals. Such efforts include software and hardware improvements, as well as changes and improvements in the structural components which form the portable terminal. Examples of such configurations include a folder-type, a slide-type, a bar-type, a swing-type, and combinations thereof.

In addition, related art portable terminals have been equipped with a functionality which stores and reproduces pictures captured via a camera. However, the related art portable terminals do not have a user interface which can manage photos by using each person captured as a photo or associate the captured photos with a variety of functions provided in the portable terminal.

### SUMMARY OF THE INVENTION

Therefore, it is an object of the present invention to provide a method for recognizing facial images of individuals on a still image (e.g., photo) or video, and storing the facial images of each of the individuals by automatically separating them from an original image, and a computer program product and a portable terminal implementing such method.

Another object of the present invention is to provide a method for adding a tag information to each image of the individuals separated from the original image, and managing the images of each individual by using the tag information, and a computer program product and a portable terminal implementing the same.

Another object of the present invention is to provide a method for recognizing faces of individuals on a still image (photo) or video, and storing a tag information for a corresponding individual, and a computer program product and a portable terminal implementing the same.

Another object of the present invention is to provide a method for recognizing faces of each individual on a still image (photo) or video, and operating certain functions provided in a portable terminal by associating contact information of each individual with the functions, and a computer program product and a portable terminal implementing the same.

Another object of the present invention is to provide a method for recognizing individuals on a still image (photo) or video, and managing each of the individuals in a group, and a computer program product and a portable terminal implementing the same.

To achieve these and other advantages and in accordance with the purposes of the present invention, as embodied and broadly described herein, there is provided a portable terminal, including: a display module for displaying still images or videos, and a controller for displaying all individuals captured in the still images or videos by using an image of a certain shape, and indicating whether or not a preset tag information for each individual is present according to a preset option.

If the preset tag for each individual is not present, the controller is configured to display a tag information input screen configured to allow a user to manually input tag information.

If the facial images of each individual are stored according to a preset option, the controller is configured to store the facial images by automatically including at least one of name information, group information and date information among tag information related to each individual into a file name.

To achieve these and other advantages and in accordance with the purposes of the present invention, as embodied and broadly described herein, there is provided an image information managing method for a portable terminal, including: recognizing faces of individuals captured in still images or videos, displaying each face of the face-recognized individuals by using an image of a certain shape, searching whether or not a preset tag information for each individual is present, and displaying whether or not the preset tag information for each individual is present.

The portable terminal according to the present invention has an effect of recognizing faces of each individual on the still images (i.e., photos) or videos, and storing the face images by automatically separating the face images from an original image.

In addition, the portable terminal according to the present invention has an effect of adding a tag information to the face images of each individual separated from the original image, and managing each of the contact information by using the tag information.

In addition, the portable terminal according to the present invention has an effect of recognizing a face of an individual on the still images (photos) or videos, and associating the tag information related to the individual with certain functions provided in the portable terminal.

Further, the portable terminal according to the present invention has an effect of recognizing each individual shown on still images or videos captured in a group, and managing them in a group.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The above and other aspects, features, and advantages of the present invention will become more apparent upon consideration of the following description of preferred embodiments, taken in conjunction with the accompanying drawing figures.

In the drawings:

Figure 1 is a schematic block diagram of a portable terminal according to one embodiment of the present invention;

Figure 2 is a front perspective view showing an exemplary portable terminal according to the present invention;

Figure 3 is a rear view showing the portable terminal in Fig. 2;

Figure 4 is an exemplary view of a radio (wireless) communication system in which a portable terminal can be operated according to the present invention;

Figure 5 is a flowchart showing a method for storing photos in the portable terminal according to the present invention;

Figures 6A and 6B are exemplary views showing a method for operating a facial recognition function in the portable terminal according to the present invention;

Figures 7A through 7D are exemplary views showing a method for displaying face-recognized individuals in a photo in the portable terminal according to the present invention;

Figures 8A and 8B are exemplary views showing a method for setting a tag information about facial photos of recognized individuals in the portable terminal according to the present invention;

Figures 9A and 9B are exemplary views showing another method for setting a tag information about facial photos of recognized individuals in the portable terminal according to the present invention;

Figures 10A and 10B are exemplary views showing a method for displaying facial photos of recognized individuals on an idle screen display in the portable terminal according to the present invention;

Figure 11 is an exemplary view showing a method for performing a certain function of a terminal by selecting recognized individuals in the portable terminal according to the present invention;

Figure 12 is an exemplary view showing a method for writing a photo diary by selecting facial photos of recognized individuals in the portable terminal according to the present invention;

Figures 13A and 13C are exemplary views showing a method for displaying a tag list for recognized individuals in the portable terminal according to the present invention; and

Figure 14 is an exemplary view showing a schematic view of a database referred for tag information management of face-recognized individuals in the portable terminal according to the present invention.

### DETAILED DESCRIPTION OF THE INVENTION

In the following detailed description, reference is made to the accompanying drawing figures which form a part hereof, and which show by way of illustration specific embodiments of the invention. It is to be understood by those of ordinary skill in this technological field that other embodiments may be utilized, and structural, electrical, as well as procedural changes may be made without departing from the scope of the present invention. Wherever possible, the same reference numerals will be used throughout the drawings to refer to the same or similar parts.

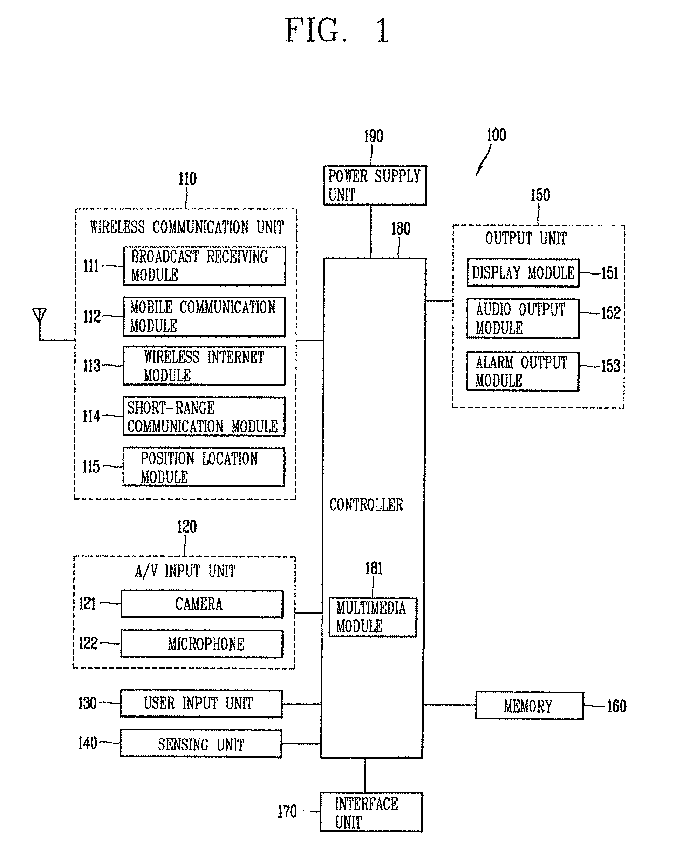

Figure 1 is a schematic block diagram of a portable terminal according to one embodiment of the present invention.

A portable terminal in the present invention may refer to a mobile phone, a smart phone, a notebook computer, a digital multimedia broadcasting terminal, a PDA (Personal Digital Assistant), a PMP (Portable Multimedia Player), a navigation, and the like.

Referring to Fig. 1, the portable terminal 100 may include a wireless communication unit 110, an A/V (Audio/Video) input unit 120, a user input unit 130, a sensing unit 140, an output unit 150, a memory 160, an interface unit 170, a controller 180, and a power supply unit 190, and the like. Figure 1 shows the portable terminal 100 having various components, but it is to be understood that implementing all of the illustrated components is not a requirement. A greater or fewer number of components may alternatively be implemented.

Hereinafter, the components of the mobile terminal will be described in more detail.

The wireless communication unit 110 typically includes one or more components allowing radio (wireless) communication between the portable terminal 100 and a wireless communication system or a network within which the portable terminal is located. The wireless communication unit 110 may include a broadcast receiver module 111, a mobile communication module 112, a wireless internet module 113, a short-range communication module 114, a position-location module 115, and the like.

The broadcast receiver module 111 receives a broadcast signal and/or broadcast associated information from an external broadcast managing server via a broadcast channel. The broadcast channel may include a satellite channel and a terrestrial channel. The broadcast managing server may refer to a server that generates and transmits a broadcast signal and/or broadcast associated information or a server that receives a previously generated broadcast signal and/or broadcast associated information and transmits the same to a terminal. Examples of the broadcast associated information may include information regarding a broadcast channel, a broadcast program, a broadcast service provider, etc. The broadcast signal may be implemented as a TV broadcast signal, a radio broadcast signal, and a data broadcast signal, among others. If desired, the broadcast signal may further include a broadcast signal combined with a TV or radio broadcast signal.

The broadcast associated information may be provided also via a mobile communication network and, in this case, the broadcast associated information may be received by the mobile communication module 112.

The broadcast associated information may exist in various forms. For example, it may exist in the form of an electronic program guide (EPG) of digital multimedia broadcasting (DMB), an electronic service guide (ESG) of digital video broadcast-handheld (DVB-H), and the like.

The broadcast receiver module 111 may be configured to receive broadcast signals using various types of broadcast systems. In particular, the broadcast receiver module 111 may receive a digital broadcast signal using a digital broadcast system, such as Digital Multimedia Broadcasting-Terrestrial (DMB-T), Digital Multimedia Broadcasting-Satellite (DMB-S), Digital Video Broadcast-Handheld (DVB-H), the data broadcasting system known as media forward link only (MediaFLO®), Integrated Services Digital Broadcast-Terrestrial (ISDB-T), and the like. The broadcast receiver module 111 is configured to be suitable for every broadcast system that provides a broadcast signal as well as the above-mentioned digital broadcast systems.

A broadcast signal and/or broadcast-associated information received via the broadcast receiver module 111 may be stored in the memory 160.

The mobile communication module 112 transmits/receives radio signals to/from at least one of a base station, an external terminal and a server in a mobile communication network. Such radio signals may include a voice call signal, a video call signal or various types of data according to text/multimedia message transmission/reception.

The wireless internet module 113 supports Internet access for the mobile terminal. This module 113 may be internally or externally coupled to the terminal.

The short-range communication module 114 refers to a module for supporting short range communications. Some examples of short-range communication technology include BluetoothTM, Radio Frequency Identification (RFID), Infrared Data Association (IrDA), Ultra-WideBand (UWB), ZigBeeTM, and the like.

The position-location module 115 identifies or otherwise obtains the location of the portable terminal. If desired, this module may be implemented using Global Positioning System (GPS) components which receive location information from a plurality of artificial satellites. Here, the location information may include coordinate information represented by the latitude and longitude. For instance, the GPS module may accurately calculate a current location of the terminal by trigonometric measurement which measures accurate time and distance from three or more satellites and uses 3 different distance values. The GPS module may use a method which obtains time and distance information from 3 satellites and corrects an error with one satellite. In particular, the GPS module may obtain the location of the latitude, longitude and altitude from the location information received from the satellites, as well as accurate time information along with 3-dimensional velocity (speed) information.

The A/V input unit 120 is configured to input an audio or video signal. The A/V input unit 120 may include a camera 121 and a microphone 122. The camera 121 processes image frames of still pictures or videos obtained by an image capture device in a video call mode or an image capturing mode. The processed image frames may be displayed on a display module 151.

The image frames processed by the camera 121 may be stored in the memory 160 or transmitted via the wireless communication unit 110. Two or more cameras 121 may be provided according to the configuration of the portable terminal.

The microphone 122 may receive an external analog audio signal (audible sound) via a microphone (or the like) in a phone call mode, a recording mode, a voice recognition mode, etc., and process it into digital data. The processed audio (voice) data may be converted for output into a format transmittable to a mobile communication base station via the mobile communication module 112 in case of the phone call mode. The microphone 122 may include various types of noise canceling (or suppression) algorithms to cancel (or suppress) noise generated in the course of receiving and transmitting audio signals.

The user input unit 130 may generate key input data inputted by a user to control various operations of the mobile terminal. The user input unit 130 may include a keypad, a dome switch, a touch pad (e.g., a touch sensitive member that detects changes in resistance, pressure, capacitance, etc.), a jog wheel, a jog switch, and the like. In particular, when a touch pad is overlaid on the display module 151 in a layered manner, it may be referred to as a touch screen.

The sensing unit 140 detects a current status (or state) of the portable terminal 100 such as an opened/closed state of the portable terminal 100, a location of the portable terminal 100, a presence or absence of user contact with the portable terminal 100, etc., and generates commands or signals for controlling the operation of the portable terminal 100. For example, when the portable terminal 100 is a slide type mobile phone, the sensing unit 140 may sense whether the slide phone is opened or closed. In addition, the sensing unit 140 can detect whether or not the power supply unit 190 supplies power or whether or not the interface unit 170 is coupled with an external device.

The interface unit 170 serves as an interface with at least one external device connected with the portable terminal 100. For example, the external devices may include wired/wireless headset ports, external power charger ports, wired/wireless data ports, card sockets, e.g., memory card ports, ports for coupling equipment having an identity module, audio input/output (I/O) ports, video I/O ports, earphone ports, among others.

Here, the identity module refers to a chip which stores a variety of information to authenticate use authority of the portable terminal 100, and may include User Identity Module (UIM) cards, Subscriber Identity Module (SIM) cards, Universal Subscriber Identity Module (USIM) cards, and the like. In addition, the equipment having the identity module (hereinafter, referred to as the 'identity device') may be implemented in the form of a smart card. Accordingly, the identity device can be connected to the terminal 100 via the port. The interface unit 170 may be used to receive inputs (e.g., data, information, power, etc.) from an external device and transfer the received inputs to one or more elements within the portable terminal 100 or may be used to transfer data from the portable terminal to an external device.

The output unit 150 is configured to provide outputs in a visual, audible, and/or tactile manner (e.g., audio signal, video signal, alarm signal, etc.). The output unit 150 may include the display module 151, an audio output module 152, an alarm output module 153, and the like.

The display module 151 may output information processed in the portable terminal 100. For example, when the portable terminal 100 is in the phone call mode, the display module 151 may display a User Interface (UI) or a Graphic User Interface (GUI) associated with a call or other communication on a screen display thereof. When the portable terminal 100 is in the video call mode or the image capturing mode, the display module 151 may display a captured and/or received image, a UI, a GUI, and the like on its screen display.

Meanwhile, when the display module 151 and the touch pad are overlaid in a layered manner to form a touch screen, the display module 151 may function as both an input device and an output device. The display module 151 may include at least one of a Liquid Crystal Display (LCD) panel, a Thin Film Transistor-LCD (TFT-LCD) panel, an Organic Light Emitting Diode (OLED) display, a flexible display screen, a three-dimensional (3D) display screen, or the like. The portable terminal 100 may include two or more display modules (or other display means) 151 according to its desired implementation. For example, the portable terminal 100 may include an external display unit (not shown) and an internal display unit (not shown).

The audio output module 152 may output audio data received from the wireless communication unit 110 or stored in the memory 160 in a call signal reception mode, a call mode, a recording mode, a voice recognition mode, a broadcast reception mode, and the like. Also, the audio output module 152 may provide audible outputs related to a particular function (e.g., a call signal reception sound, a message reception sound, etc.) performed by the portable terminal 100. The audio output module 152 may include a speaker, a buzzer, or the like.

The alarm output module 153 may provide outputs to inform about the occurrence of an event of the portable terminal 100. Typical events may include a call signal reception, a message reception, a key signal input, and the like. In addition to audio or video outputs, the alarm output module 153 may provide outputs in a different manner to inform about the occurrence of an event. For example, the alarm output module 153 may provide outputs in the form of vibrations (or other tactile means). When a call signal, a message, or some other incoming communication is received, the alarm output module 153 may provide tactile outputs (i.e., vibrations) to inform the user. By providing tactile outputs, the user can recognize the occurrence of various events. Outputs informing about the occurrence of an event may be also provided via the display module 151 or the audio output module 152.

The memory 160 may store software programs or the like used for the processing and controlling performed by the controller 180, or may temporarily store inputted/outputted data (e.g., a phonebook, messages, still images, video, etc.).

The memory 160 may include at least one type of storage medium including a flash memory type, a hard disk type, a multimedia card micro type, a card-type memory (e.g., SD or XD memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM) magnetic memory, a magnetic disk, an optical disk, and the like. Also, the portable terminal 100 may cooperate with a web storage device on the internet that remotely performs the storage function of the memory 160.

The controller 180 typically controls the general operations of the mobile terminal. For example, the controller 180 performs controlling and processing associated with voice calls, data communications, video calls, and the like. In addition, the controller 180 may include a multimedia module 181 for reproducing multimedia data. The multimedia module 181 may be implemented integrally within the controller 180 or by software executed therein, or may be configured separately from the controller 180. The power supply unit 190 receives external or internal power and supplies power required for the operations of the respective elements under the control of the controller 180.

Various functionalities described herein may be implemented in a computer-readable medium using, for example, computer software, hardware, or any combination thereof.

For a hardware implementation, the functionalities described herein may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and electronic units designed to perform the functions described herein. In some cases, such functionalities may be implemented by the controller 180.

For a software implementation, the functionalities such as operation procedures or functions may be implemented together with separate software modules that allow performing of at least one function or operation. Software codes can be implemented by a software application written in any suitable programming language. The software codes may be stored in the memory 160 and executed by the controller 180.

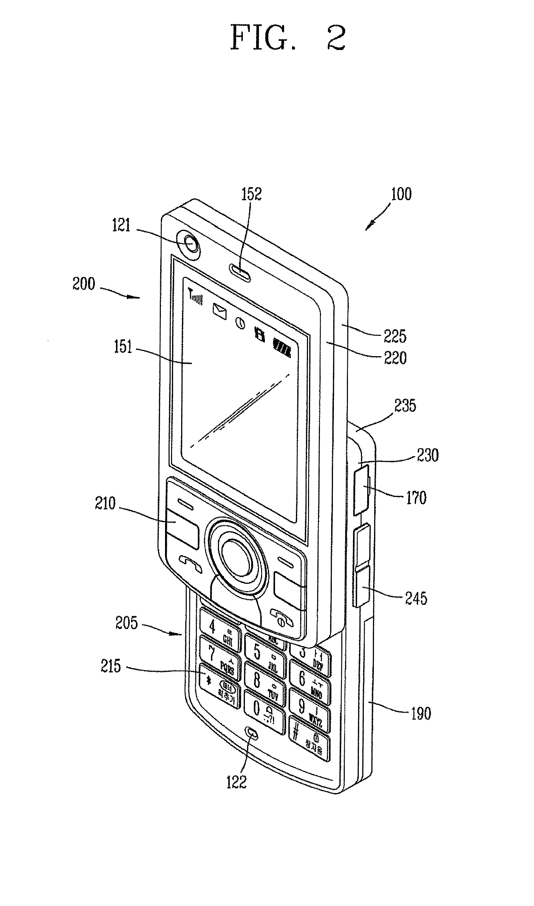

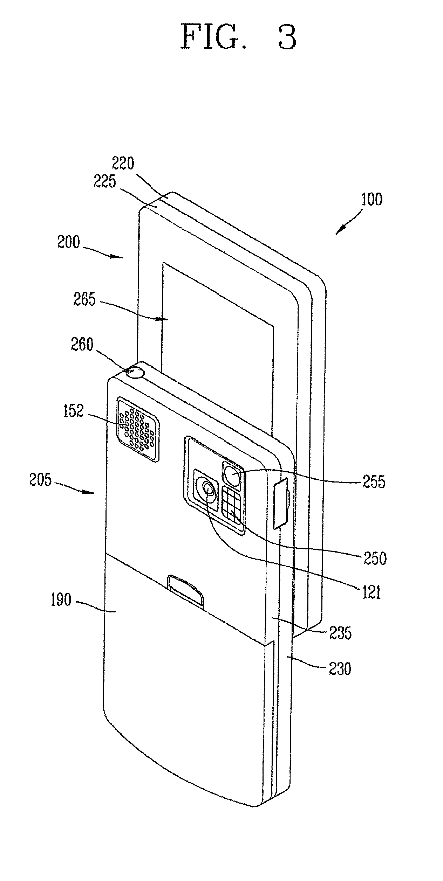

So far, the portable terminal has been described from the perspective of its functions. Hereinafter, external elements of the portable terminal will be described from the perspective of their functions with reference to Figs. 2 and 3. The portable terminal may be implemented in a variety of different configurations. Examples of such configurations include a folder-type, a bar-type, a swing-type, a slide-type and combinations thereof. For clarity, further description will primarily relate to a slide-type portable terminal. However such teachings apply equally to other types of portable terminals.

Figure 2 is a front perspective view of a portable terminal according to the present invention.

The portable terminal according to the present invention includes a first body 200 and a second body 205 disposed to be slidably movable along at least one direction relative to one another.

A state in which the first body 200 is disposed to overlap with or overlie the second body 205 may be called a "closed configuration," and as shown in the drawing, a state in which the first body 200 and second body 205 are so disposed relative one another as to expose at least a portion of the second body 205 may be called an "opened configuration." In the closed configuration, the portable terminal mainly operates in a standby mode (idle mode), and the standby mode may be released according to a user manipulation. The portable terminal operates mainly in the calling mode or the like in the opened configuration, and it can be changed to the standby mode with the lapse of a certain time period or a user manipulation.

The case (a casing, a housing, a cover, etc.) constituting the external appearance of the first body 200 is formed by a first front case 220 and a first rear case 225. Various electronic components are installed in a space between the first front case 220 and the first rear case 225. One or more intermediate cases may be additionally disposed between the first front case 220 and the first rear case 225.

The cases may be formed by injection-molding a synthetic resin or may be made of a metallic material such as stainless steel (STS) or titanium (Ti), and the like.

The display module 151, a first audio output module 152-1, a first camera module 121-1 or a first user input unit 130-1 may be located on the first body 200, specifically, on the first front case 220 of the first body 200.

The display module 151 may include an LCD (Liquid Crystal Display), an OLED (Organic Light Emitting Diode) display, etc. that visually displays information.

A touch pad may be overlaid in a layered manner on the screen of the display module 151 to allow the display module 151 to function as a touch screen to enable the inputting of information by a user's touch.

The first audio output module 152-1 may be implemented in the form of a receiver or a speaker.

The first camera module 121-1 may be implemented to be suitable for capturing images or video with respect to the user and so on.

Like the first body 200, the case constituting the external appearance of the second body 205 is formed by a second front case 230 and a second rear case 235. A second user input unit 215 may be disposed on a front face of the second body 205, specifically, on the second front case 230.

A third user input unit 245, the microphone 122, and the interface unit 170 may be disposed on at least one of the second front case 230 and the second rear case 235.

The first to third user input units 210, 215, and 245 may be generally referred to as the manipulation unit 130, and various techniques can be employed for implementing the manipulation unit so long as they can be operated by a user in a tactile manner.

For example, the user input units can be implemented with a dome switch or touch pad that can receive user commands or information according to a user's pressing, pushing or touching, or implemented in the form of a wheel that rotates a key, a jog element, a joystick, or the like.

In terms of their functions, the first user input unit 210 is used for inputting commands such as start, end, scroll or the like, and the second user input unit 215 is used for inputting numbers, characters, symbols, or the like.

Also, the third user input unit 245 may operate as a hot key for activating a particular function within the portable terminal.

The microphone 122 may be implemented in a form suitable to transduce the voice of a user, other sounds, or the like.

The interface unit 170 may be used as a link (passage or path) through which the portable terminal can exchange data or the like with an external device. For example, the interface unit 170 may be implemented as at least one of a connection port for connecting an earphone to the portable terminal via a wired (fixed) or wireless means, a port for short-range communications (e.g., an Infrared Data Association (IrDA) port, a BluetoothTM port, a wireless LAN port, etc.), power supply ports for providing power to the portable terminal, or the like.

The interface unit 170 may be configured using a card socket (e.g., for coupling to an external card including a subscriber identity module (SIM) card, a user identity module (UIM) card, and a memory card for information storage.

The power supply unit 190 for supplying power to the portable terminal is located at a side portion of the second rear case 235.

The power supply unit 190 may be, for example, a rechargeable battery that can be detached.

Figure 3 is a rear view showing the portable terminal in Fig. 2.

Referring to Fig. 3, a second camera module 121-2 may additionally be disposed on a rear surface of the second rear case 235 of the second body 205. The second camera module 121-2 may have an image capture direction which is substantially the opposite to that of the first camera module 121-1, and may support a different resolution, image size, or number of pixels as compared to the first camera module.

For instance, the first camera module 121-1 may operate with a relatively lower resolution to capture images of a user's face and transmit the same to the other party during video call communication or the like, while the second camera module 121-2 may operate with a relatively higher resolution to capture images of general subjects with high picture quality not for immediately being transmitted but for later use or for communicating to others.

A flash lamp 250 and a mirror 255 may be additionally disposed adjacent to the second camera module 121-2. When an image of a subject is to be captured with the second camera module 121-2, the flash lamp 250 illuminates the subject. The mirror 255 allows a user to see themselves when they wants to capture their own image (self-image capturing) by using the second camera module 121-2.

The second rear case 235 may further include a second audio output module 152-2.

The second audio output module 152-2 may implement a stereophonic sound function in conjunction with the first audio output module 152-1 and may be also used for sending and receiving audio calls in a speaker phone mode.

A broadcast signal receiving antenna 260 may be disposed at one side or region of the second rear case 235, in addition to an antenna that supports mobile communications. The antenna 260 can be configured to be retractable from the second body 205.

One part of a slide module 265 that slidably combines the first body 200 and the second body 205 may be disposed on the first rear case 225 of the first body 200.

The other part of the slide module 265 may be disposed on the second front case 230 of the second body 205, which may not be exposed as shown in the drawing.

In the above description, the second camera module 121-2 and so on is disposed on the second body 205, but such a described configuration is not meant to be limiting.

For instance, one or more of the elements (e.g., 260, 121-2 and 121-3 and 250, 152-2), which are disposed on the second rear case 235 in the above description, may be mounted on the first body 200, mainly, on the first rear case 225. In this case, those elements disposed on the first rear case 225 can be protected (or covered) by the second body 205 in the closed configuration. In addition, even if the second camera module 121-2 is not provided, the first camera module 121-1 may be configured to rotate (or otherwise be moved) to thus allow image capturing in various directions.

The portable terminal 100 as shown in Figs. 1 through 3 may be configured to operate within a communication system which transmits data via frames or packets, including both wireless and wired communication systems, and satellite-based communication systems.

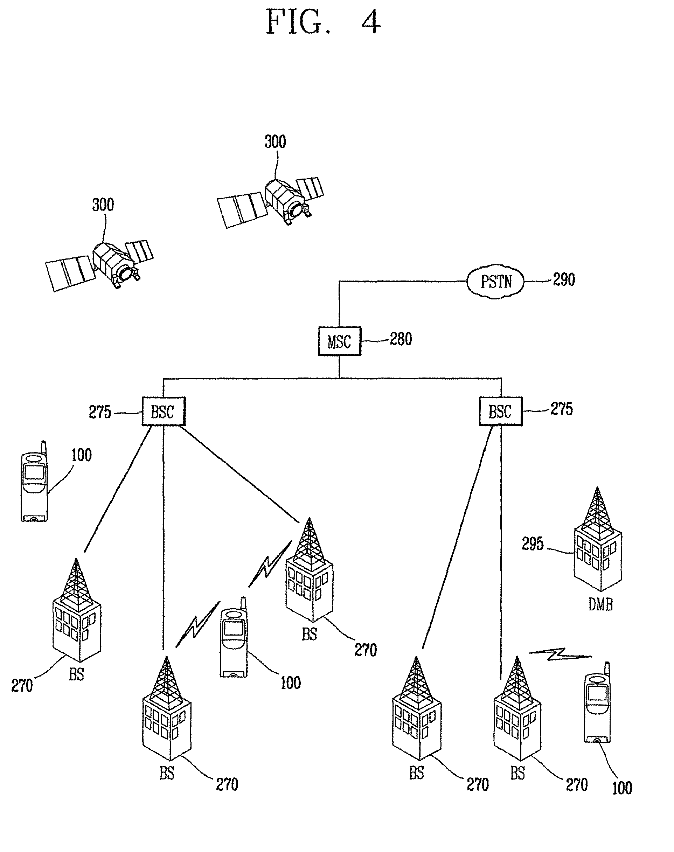

Hereinafter, referring to Fig. 4, description of the communication system in which the portable terminal can be operated according to the present invention will be given in detail.

Such communication systems utilize different air interfaces and/or physical layers. Examples of such air interfaces utilized by the communication systems include Frequency Division Multiple Access (FDMA), Time Division Multiple Access (TDMA), Code Division Multiple Access (CDMA), and Universal Mobile Telecommunications System (UMTS), the Long Term Evolution (LTE) of the UMTS, and the Global System for Mobile communications (GSM). By way of nonlimiting example only, further description will relate to a CDMA communication system, but such teachings apply equally to other system types.

Referring now to Fig. 4, a CDMA wireless communication system is shown having a plurality of portable terminals 100, a plurality of base stations 270, Base Station Controllers (BSCs) 275, and a Mobile Switching Center (MSC) 280. The MSC 280 is configured to interface with a conventional Public Switch Telephone Network (PSTN) 290. The MSC 280 is also configured to interface with the BSCs 275. The BSCs 275 are coupled to the base stations 270 via backhaul lines. The backhaul lines may be configured in accordance with at least one of several known interfaces including, for example, E1/T1, ATM, IP, PPP, Frame Relay, HDSL, ADSL, or xDSL. It is to be understood that the system as shown in Fig. 4 may include a plurality of BSCs 275.

Each base station 270 may include one or more sectors, each sector having an omni-directional antenna or an antenna pointed in a particular direction radially away from the base station 270. Alternatively, each sector may include two or more antennas for diversity reception. Each base station 270 may be configured to support a plurality of frequency assignments, with each frequency assignment having a particular spectrum (e.g., 1.25 MHz, 5 MHz).

The intersection of a sector and frequency assignment may be referred to as a CDMA channel. The base stations 270 may also be referred to as Base Station Transceiver Subsystems (BTSs). In some cases, the term "base station" may be used to refer collectively to a BSC 275, and one or more base stations 270. The base stations may also be denoted "cell sites." Alternatively, individual sectors of a given base station 270 may be referred to as cell sites.

As shown in Fig. 4, a Broadcasting Transmitter (BT) 295 is shown broadcasting to portable terminals 100 operating within the system. The broadcast receiver module 111 as shown in Fig. 1 is typically configured to receive broadcast signals transmitted by the BT 295.

In addition, Figure 4 depicts several Global Positioning System (GPS) satellites 300. Such satellites 300 facilitate locating the position of some or all of the portable terminals 100. Two satellites are depicted, but it is understood that useful positioning information may be obtained with greater or fewer satellites. The GPS module 115 (Fig. 1) is typically configured to cooperate with the satellites 300 to obtain desired position information. It is to be understood that other types of position detection technology, (i.e., location technology that may be used in addition to or instead of GPS location technology) may alternatively be implemented. If desired, at least one of GPS satellites 300 may alternatively or additionally be configured to provide satellite DMB transmissions.

During typical operation of the wireless communication system, the Base Stations 270 receive sets of reverse-link signals from various portable terminals 100. The portable terminals 100 are engaging in calls, messaging, and other communications. Each reverse-link signal received by a given base station 270 is processed within that base station. The resulting data is forwarded to an associated BSC 275. The BSC 275 provides call resource allocation and mobility management functionality including the orchestration of soft handoffs between base stations 270. The BSCs 275 also route the received data to the MSC 280, which provides additional routing services for interfacing with the PSTN 290. Similarly, the PSTN 290 interfaces with the MSC 280, and the MSC 280 interfaces with the BSCs 275, which in turn control the base stations 270 to transmit sets of forward-link signals to the portable terminals 100.

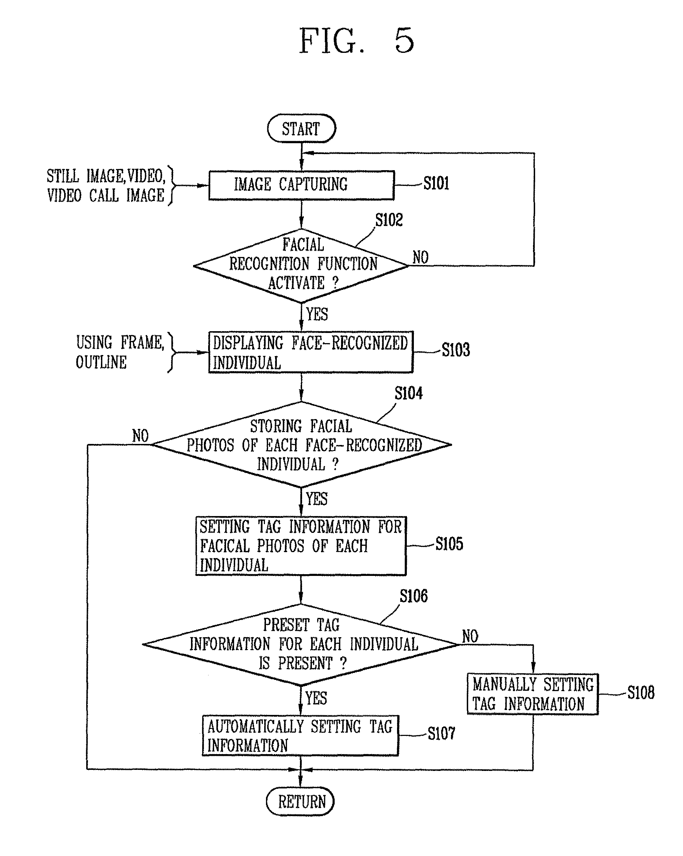

Figure 5 is a flowchart showing a method for storing photo information in a portable terminal according to the present invention.

When a user uses the camera 121 disposed in the portable terminal to capture a photo (S101), the controller 180 is configured to perform a facial recognition on a captured photo according to a preset setting option (S 102).

Here, the "facial recognition" function may be applied to still images obtained by an image capturing as well as videos obtained by a video capturing and a video call. That is, the videos refers to consecutively playing a plurality of still image frames, thus to be applied to the facial recognition function.

The facial recognition function may be performed by a facial recognition algorithm (or a facial recognition system) provided in the portable terminal, and may recognize an individual in the photograph by characteristic information, such as the distance between the eyes, nose, location of mouth in a face, and facial shape.

The facial recognition function may be operated by using the currently captured image or by retrieving a photo pre-stored in a photo album. In addition, the facial recognition function may also be operated for a photo capturing a person as well as a group picture capturing a plurality of individuals.

Hereinafter, for the convenience of explanation, a photo (still image) or a video (or a certain frame of a video) retrieved for facial recognition is referred to as an "original photo (or original image)," and a photo of an individual recognized in the original photo is referred to as a "facial photo (or facial image)." Here, the facial photo does not necessarily mean a photo (image) displaying the face only, rather it means a photo (image) including at least the face so that the user may recognize the individual shown in a photo.

When the original photo is displayed, if the facial recognition function is activated, the controller 180 recognizes faces in the original photo by a preset facial recognition algorithm and displays each face of the individuals in a manner to be recognizable by the user (S103).

For instance, a face-recognized individual in the photo may be displayed as a specific image including the face. The specific image can be in the form of a circular or polygonal frame for enclosing each person together with the recognized face, or an image of a shape including the contour of the face. The size, shape, thickness and color of the frame may be set as default, and also be changed by the user through the setting option.

The controller 180 may capture the face-recognized individuals shown in the original photo in the displayed frame shape, and detect characteristic information about each face of the individuals, thus to manage an additional database (e.g., facial characteristic information database). That is, the controller 180 may determine whether or not an object captured in the photo is a face of a person, and further distinguish individuals recognized in the photo from each other by using the facial characteristic information of each of the individuals.

Meanwhile, if the faces of the individuals in the photo are captured, the controller 180 may store facial photos of each person (S105) and set tag information for each facial photo of the captured individuals (S 106).

The controller 180 may automatically set tag information by referring to the facial characteristic information database (S107), and if it is a new person's face that is not registered in the facial characteristic information database, may directly receive an inputting of tag information related to the new person's face from the user (S108). In addition, the controller 180 may register the facial characteristic information of the new face and its tag information to the facial characteristic information database, thus to manage the same.

The tag information may be set for the facial photos of all of the face-recognized individuals shown on the original photo, or set only for a facial photo of a certain person selected by the user among the facial photos of the face-recognized people shown on the original photo. The tag information may include information related to the original photo (e.g., a file name of the original photo, captured positions of each person in the original photo, and the like), contact information (e.g., contact number and name), and phonebook information.

The controller 180 may manage tag information for each facial photo by registering the same to a separate database (e.g., tag information database), or by associating the same with the facial characteristic information database.

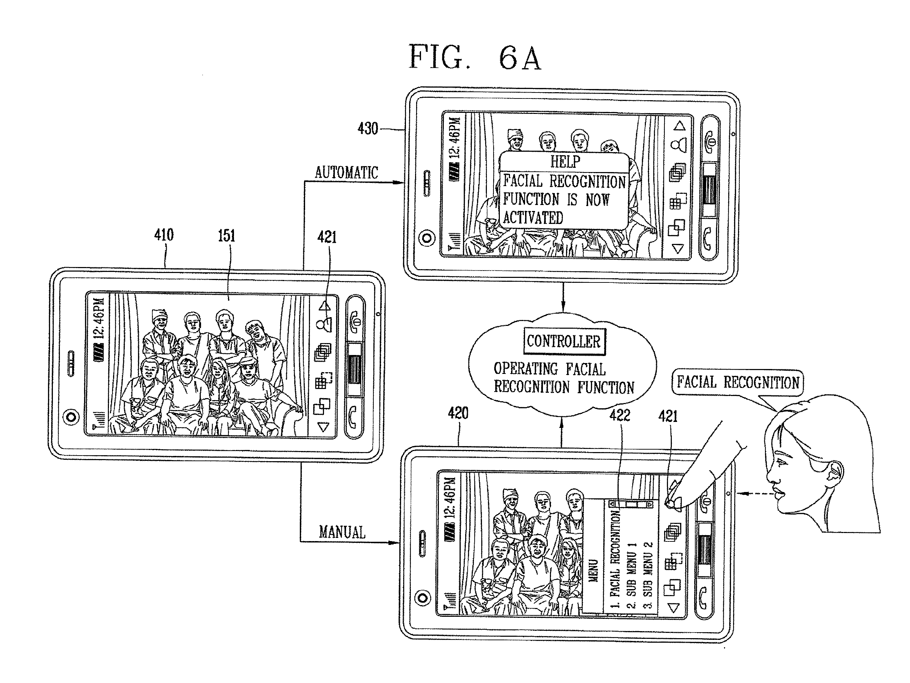

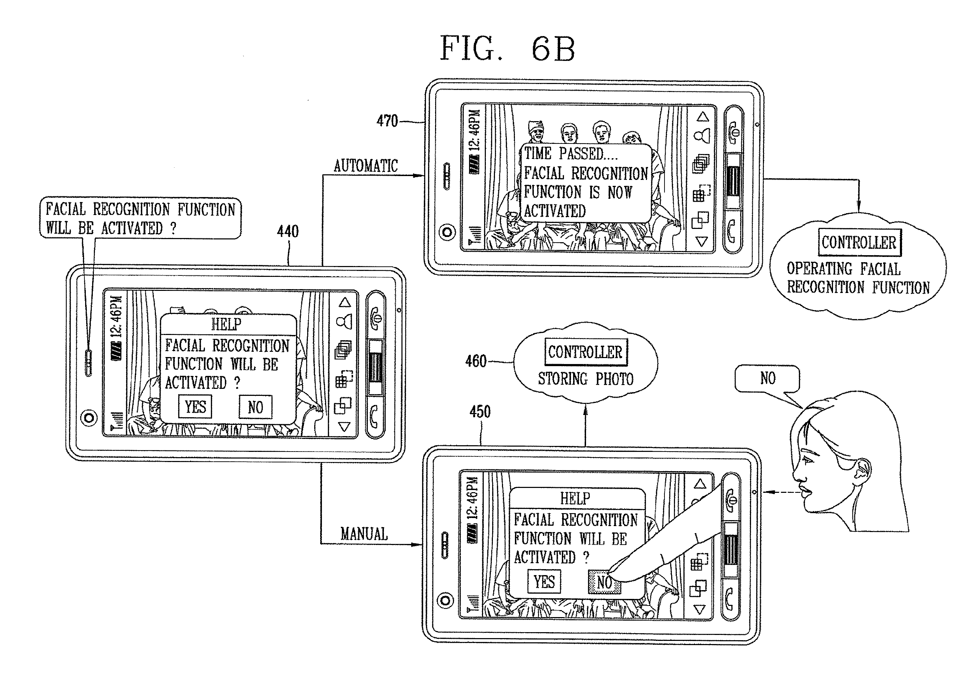

Figures 6A and 6B are exemplary views showing a method for operating a facial recognition function in the portable terminal according to the present invention.

As shown in Fig. 6A, if the user captures an image by using the camera function provided in the portable terminal or retrieves a photo stored in a photo album, the controller 180 displays the photo 410 on the display module 151.

The controller 180 receives an inputting of a command directly from the user through a key manipulation, touch or voice, and then operates the facial recognition function for recognizing the faces shown on the photo 420. In addition, the menus for the facial recognition function displayed on the display module 151 may be displayed as an icon 421 or a software key, or be displayed as one of a software menu list 422.

In addition, if a person's face is included in the captured photo, the controller 180 may automatically operate the facial recognition function according to the preset setting option when the photo is to be stored 430. That is, if the facial recognition function is set in the setting option, when a camera shutter is manipulated, the controller 180 automatically operates the facial recognition algorithm as well as stores the photo, thus to recognize and capture the face(s) on the captured photo. If there is a person who is determined to be the same as the pre-stored person due to facial characteristics, the controller 180 may display tag information for the facial photo of the corresponding person.

As shown in Fig. 6B, if the person's face is included in the captured photo, the controller 180 may output an announcement message 440, by voice or text messages, to check whether or not the facial recognition should be performed. When the announcement message is outputted, if the user deactivates 450 the facial recognition function, the controller 180 may directly store 460 the photo without recognizing the face.

After the announcement message is outputted, if the facial recognition function is not deactivated within a pre-determined period of time, the controller 180 may automatically activate 470 the facial recognition function. Further, according to the setting option, the facial recognition can be immediately started without outputting the announcement message.

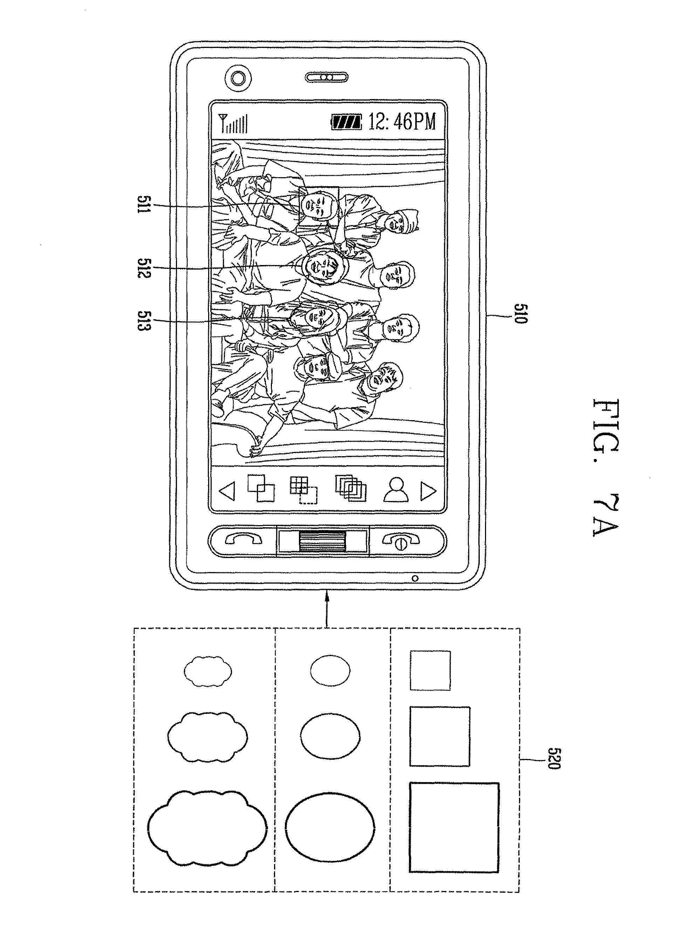

Figures 7A through 7D are exemplary views showing a method for displaying face-recognized individuals in a photo in the portable terminal according to the present invention.

If the facial recognition function is automatically or manually activated as described above, the controller 180 as shown in Fig. 7A may recognize and display faces 510 of the individuals displayed on the photo.

The controller 180 may display the face-recognized individuals shown on the photo on the display module 151 as frames (or outlines) 511 ∼ 513 of a circular or polygonal shape (e.g., a rectangle, tri-angle, circle or a certain shape conforming to flowers or faces) having a certain size and shape so as to enclose each face.

In addition, the size, shape, thickness of line and color of the frames 511 ∼ 513 may be displayed differently according to a pre-set condition.

For instance, a green frame may be used for a person who is the same as the pre-stored individual, and a red frame may be used for a new person who is not pre-stored. The user may randomly change the color, shape and thickness of the frame through the setting option, and the size 520 of the frame can be automatically adjusted to be smaller or larger in proportion to the facial size.

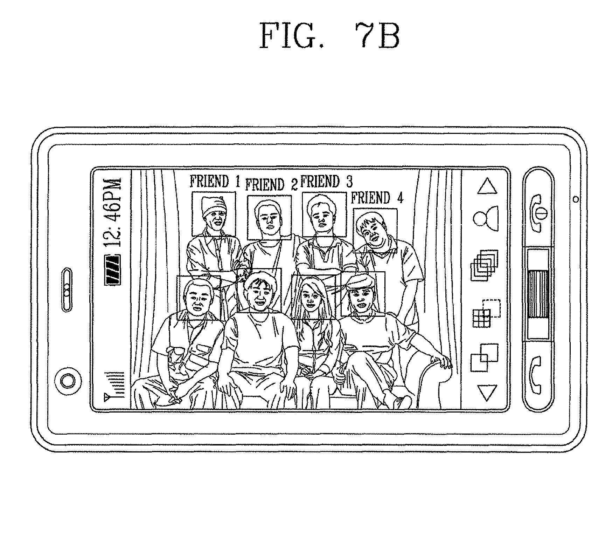

As shown in Fig. 7B, if a person identical to the face-recognized person is stored in the terminal, contact information such as a contact number and a name (e.g., friend 1 - friend 4) may be additionally displayed.

Meanwhile, if the face-recognized individuals shown on the photo are respectively displayed by the certain image (e.g., frame, outline), the controller 180 may deselect the certain image through a touch input by the user, or select it again.

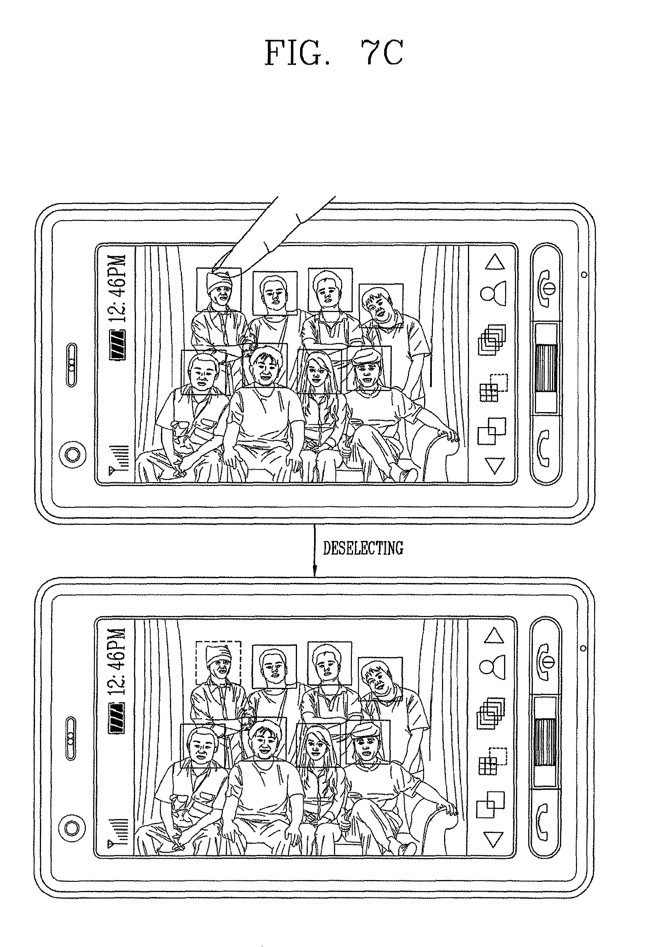

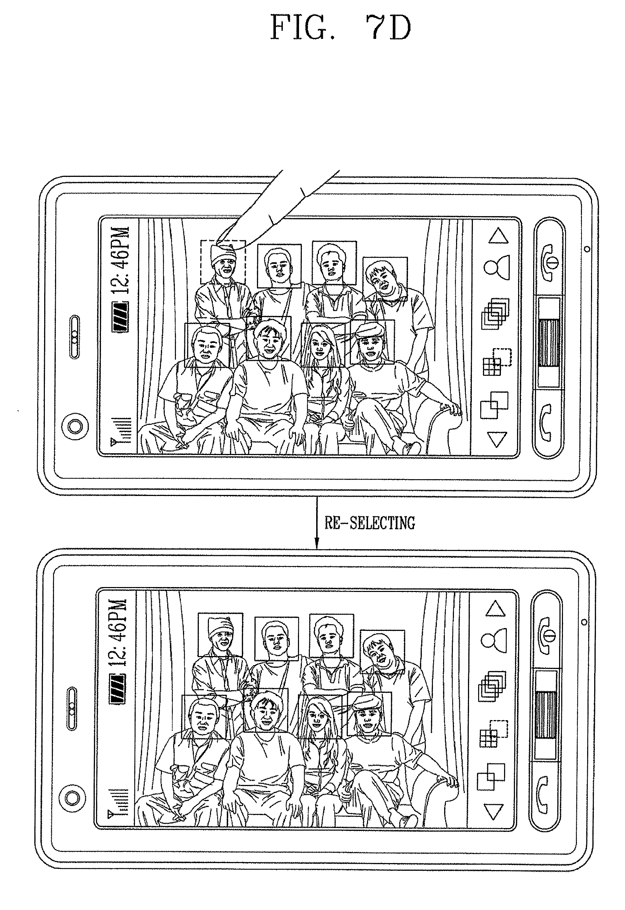

For instance, if the user singly touches the face displayed with a certain image as shown in Fig. 7C, the certain image is removed from the screen. As shown in Fig. 7D, if the user re-selects the face which does not display the certain image, the certain image is displayed on the face again. The transparency or color of the image representing the deselected or selected face can be changed, thus to allow the user to recognize the selected or deselected face. The certain image representing the face-recognized individuals on the photo depends on a shape set as the default, and also may be configured to allow the user to directly change the display method in the setting option.

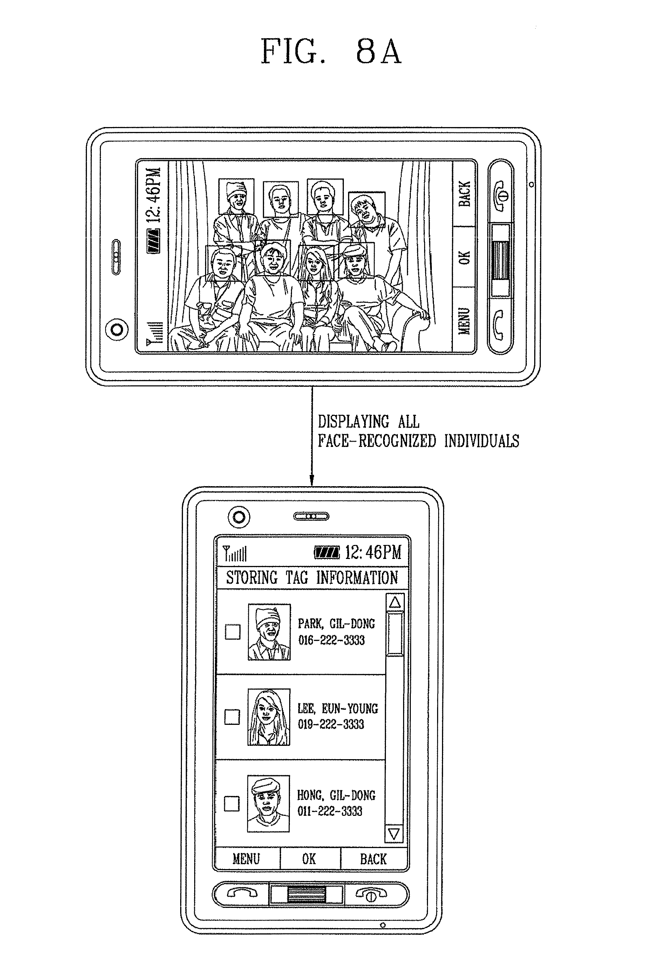

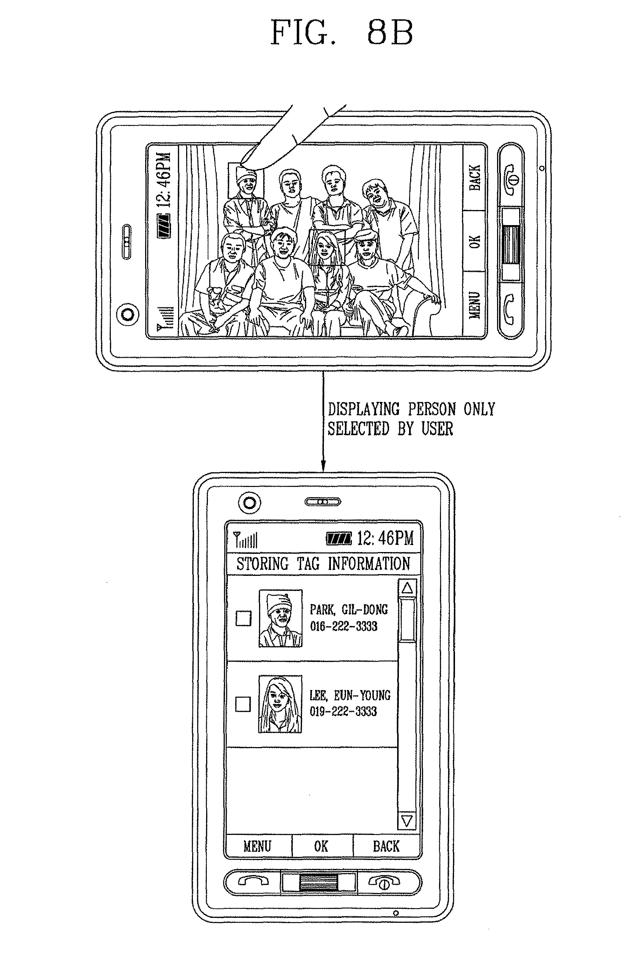

Figures 8A and 8B are exemplary views showing a method for setting tag information about facial photos of recognized individuals in the portable terminal according to the present invention.

As described above, if faces in the original photo are recognized, the controller 180 may display a tag information setting screen display by the preset setting option or by the command inputted from the user (e.g., the command inputted through key manipulation, touch or voice).

Referring to Fig. 8A, the tag information setting screen display may display the facial photos of all individuals recognized in the original photo. As shown in Fig. 8B, the tag information setting screen display may display the facial photos of individuals only selected by the user on the original photo. Here, the tag information setting screen display may include facial photos of new individuals of which tag information is not preset, thus to allow the user to set tag information for the new individuals of which the tag information is not preset.

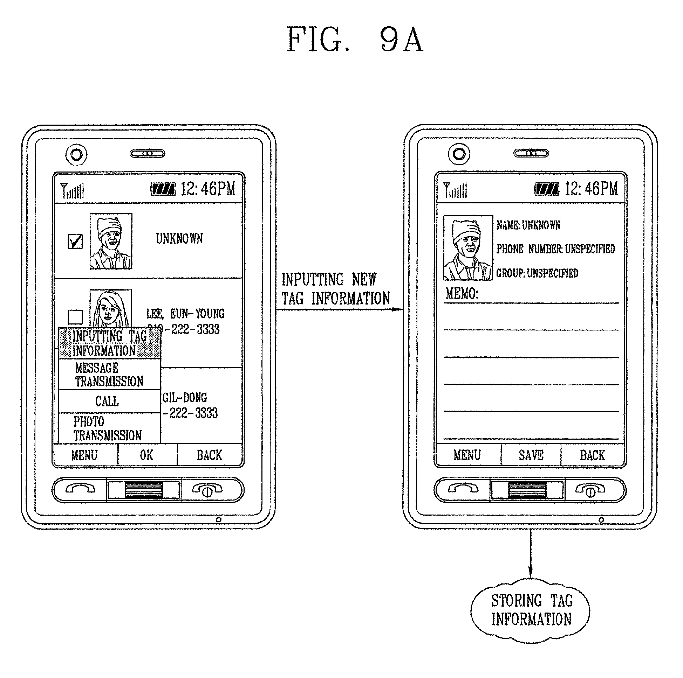

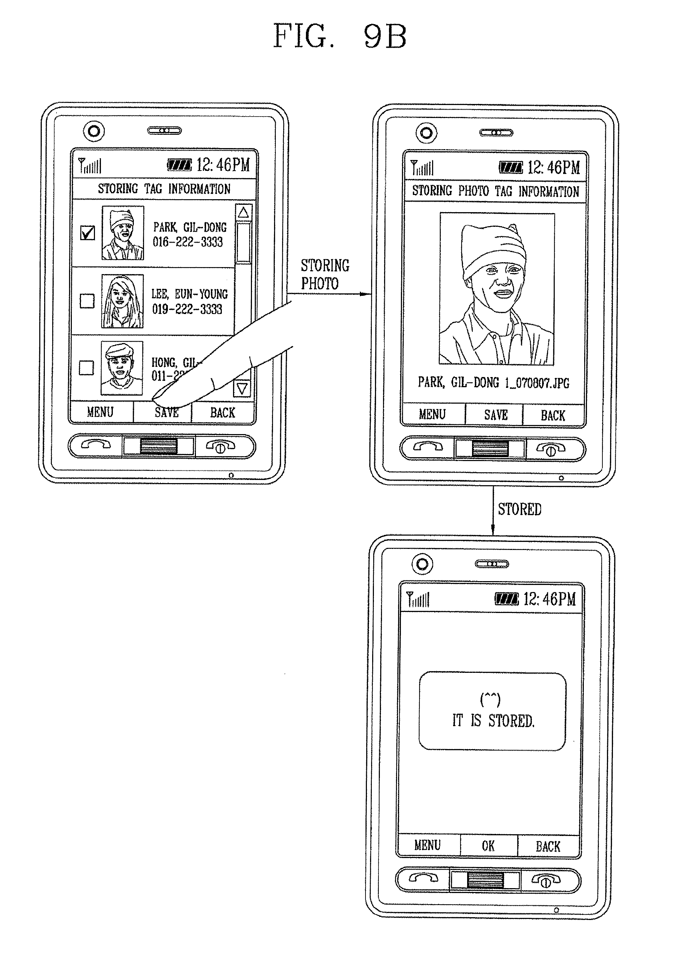

Figures 9A and 9B are exemplary views showing another method for setting tag information about facial photos of recognized individuals in the portable terminal according to the present invention.

Referring to Fig. 9A, the user may select certain individuals on the tag information setting screen display so as to change the tag information for the selected individuals or to input new tag information. The tag information may include name information, group information, contact information (e.g., a telephone number, an e-mail address, a mailing address, home-page address, and the like) as well as event information (e.g., a birthday, a graduation ceremony, an anniversary, and the like.).

Referring to Fig. 9B, when the tag information is stored, a file name of a facial photo can be changed by using the tag information. For instance, if the facial photo is automatically to be stored, the controller 180 may automatically set a file name using numbers or alphabetical letters according to a stored order. In this embodiment, the file name can be set by including name information of the individual who is to be stored in the tag information. The file name can also be set by using all types of information included in the tag information, such as group information, data information, as well as name information.

So far, description of the method for recognizing the faces on the photo retrieved from the captured photo or the photo album in the portable terminal, and storing tag information for each facial photo has been given in detail.

Hereinafter, various methods for associating the facial photo having the tag information with functions provided in the terminal, and executing the functions will be described in detail.

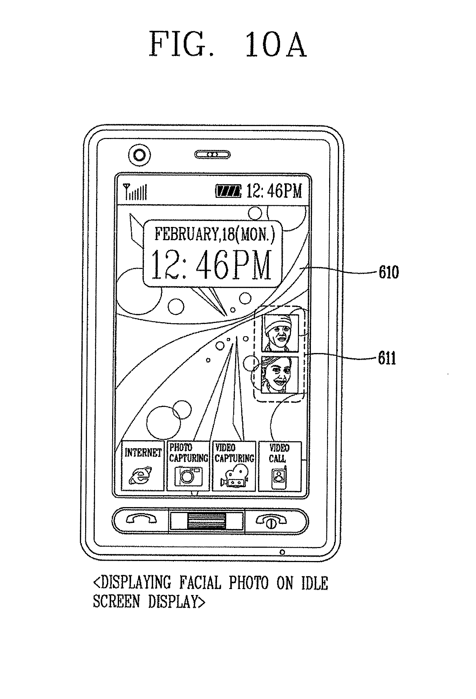

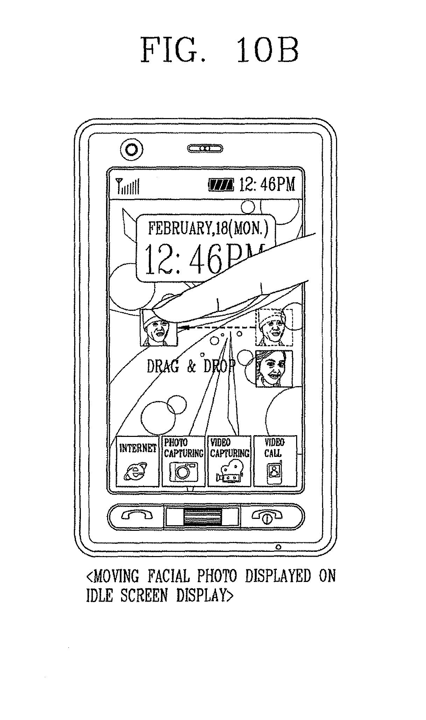

Figures 10A and 10B are exemplary views showing a method for displaying facial photos of recognized individuals on an idle screen display in the portable terminal according to the present invention.

The idle screen display (standby screen display) refers to an initial screen display shown in a standby state in which any function is not performed, after the terminal is turned on or opened.

Referring to Fig. 10A, facial photos of each individual storing the above-described tag information may be displayed on the idle screen display. A plurality of facial photos may be displayed on the idle screen display, and contact information as tag information is set to each facial photo, thereby selecting the facial photo on the idle screen display and directly performing a call connection to the individual associated with the selected photo. Here, different functions of the portable terminal, other than the call connection function, can be directly executed on the idle screen display.

Certain functions to be executed can depend on a method for touching the face-recognized individual. For instance, if the user consecutively touches a facial photo of a certain person more than twice, he may directly call the person associated with the facial photo. If the user touches a facial photo of a certain person for longer than a pre-set period of time and menu windows pop up, then he may select one of the menu windows and directly execute a function associated with the selected menu item. Further, if the user selects a facial photo of a certain person and then moves the facial photo to be overlaid with a certain function icon or menu displayed on the screen display by dragging-and-dropping or flicking, he may then immediately execute the function associated with the certain function icon or menu.

Alternatively or additionally, upon touching the face, the name of the person may be spoken, either in the voice of the person (pre-recorded), in the voice of the user (pre-recorded) or in a machine generated voice. Alternatively or additionally, upon touching the face, a short movie of the individual (pre-recorded) may play. The movie may be a movie of the individual reciting personal characteristics such as birth date, email address, etc.

Referring to Fig. 10B, the user may drag-and-drop facial photos displayed on the idle screen display so as to change the position of the facial photos. In addition, the user may touch the facial photos displayed on the idle screen display so as to delete the facial photos on the idle screen display, or may display other facial photos on the idle screen display by retrieving them from the photo album.

Here, even though the facial photos displayed on the idle screen display are deleted, it does not mean that the facial photos are completely deleted in the memory 160 where they are originally stored. Accordingly, the facial photos which were deleted on the idle screen display can be, if needed, retrieved and displayed again on the idle screen display.

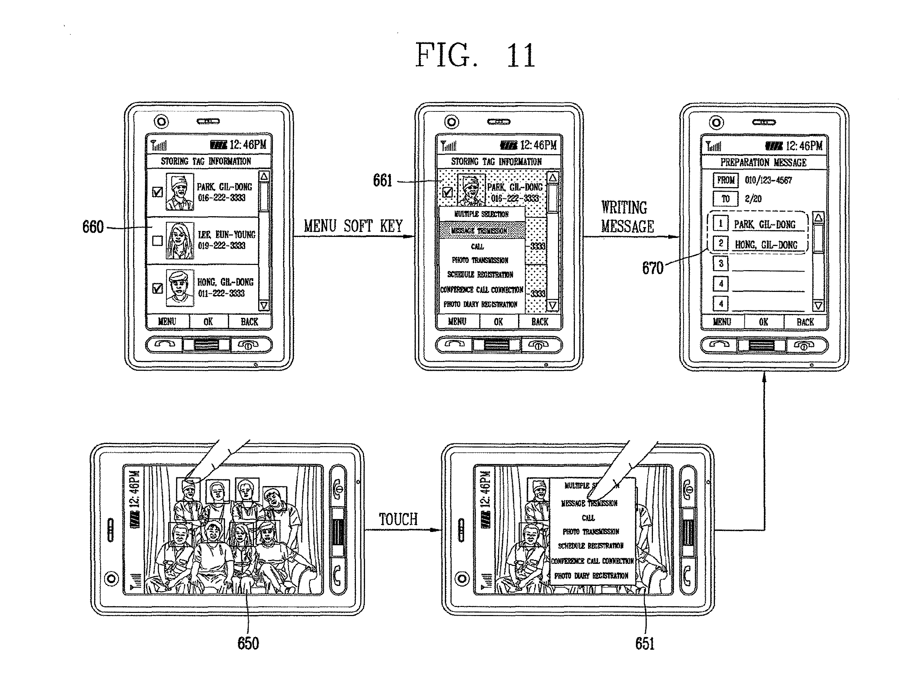

Figure 11 is an exemplary view showing a method for performing a certain function of a terminal by selecting recognized individuals in the portable terminal according to the present invention.

Individuals desired by the user to execute a certain function may be selected from an original photo 650 showing face-recognized individuals or facial photos of the individuals displayed on the tag information setting screen 660. If the user selects facial photos of certain individuals, the controller 180 outputs a list of executable menus 651, 661. The list of the executable menus may include message transmission, photo transmission, schedule registration, conference call connection, photo album registration, and the like.

For instance, the controller 180 may collectively transmit a short message to all of the selected individuals, simultaneously connect to all of the selected individuals for a conference call, or simultaneously transmit a photo or file to all of the selected individuals.

If it is assumed that the 'message transmission' function is selected from the menu list, the controller 180 automatically inputs information 670 related to all of the selected individuals to a recipient list, and then transmits a message inputted by the user to all of the selected individuals. If another function is selected from the menu list, the controller 180 may automatically input information related to all of the selected individuals on an execution screen display of the selected function.

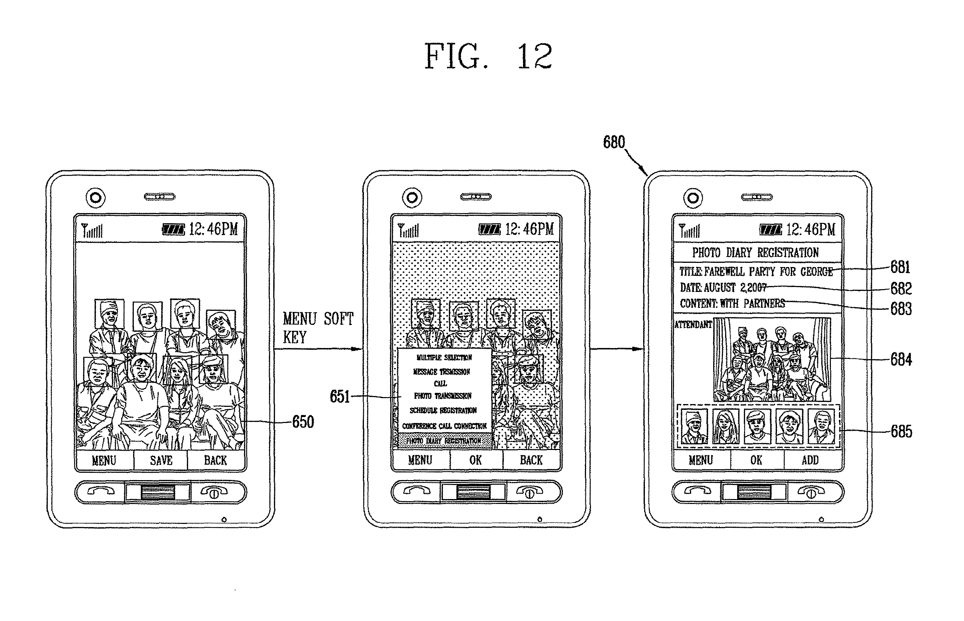

Figure 12 is an exemplary view showing a method for writing a photo diary by selecting facial photos of recognized individuals in the portable terminal according to the present invention.

The 'photo diary' function allows the user to store a random photo together with a variety of information associated with the photo, and to easily search the information associated with the photo even after the time has passed. Other portable terminals may have different names for this function.

After the menu list 651 is displayed on the original photo 650 showing the face-recognized individuals, if the 'photo diary' function is selected from the menu list, the controller 180 displays an execution screen display 680 of the 'photo diary' function.

The 'photo diary' function may include a title of a photo 681, a date 682, its content 683, an original photo 684, and a list of facial photos 685 of face-recognized individuals on the original photo. The list of facial photos 685 refers to the facial photos of individuals selected from the original photo 684.

A variety of functions of the portable terminal may be simultaneously executed by selecting individuals displayed on the list of facial photos 685 of the photo diary, as described in Fig. 11.

As so far described, the method for executing various functions provided in the portable terminal by associating the functions with the facial photos having tag information has been described in detail.

Hereinafter, the method for displaying a tag list by using a variety of statistical data associated with the list of individuals of facial photos having the tag information (hereinafter, referred to as the 'tag list'), and the method for executing a variety of functions provided in the portable terminal by associating the tag list with the functions will be described in detail.

If an image of a face-recognized person is captured or a certain function of the terminal (e.g., call connection, message transmission, file transmission, and the like) is executed with respect to the face-recognized person, the controller 180 is configured to separately manage the number of photos, frequency of image capturing or the number of times of executing a function for each of the face-recognized individuals. That is, the number of photos, frequency of image capturing or the number of times of executing the function may be used to determine the degree of intimacy between the user and each individual.

Here, the frequency of the image capturing is to determine the degree of intimacy relative to time. Accordingly, even though two different individuals have the same number of photos captured, a person having more photos that has been recently captured would have a higher degree of intimacy than a person having more photos that were previously captured.

The tag list may display individuals selected on the 'tag information setting screen display' or individuals selected from the original photo. Here, intimacy-related information about each person or groups may be separately displayed. Contact information corresponding to each information used to determine the degree of intimacy may be separately displayed.

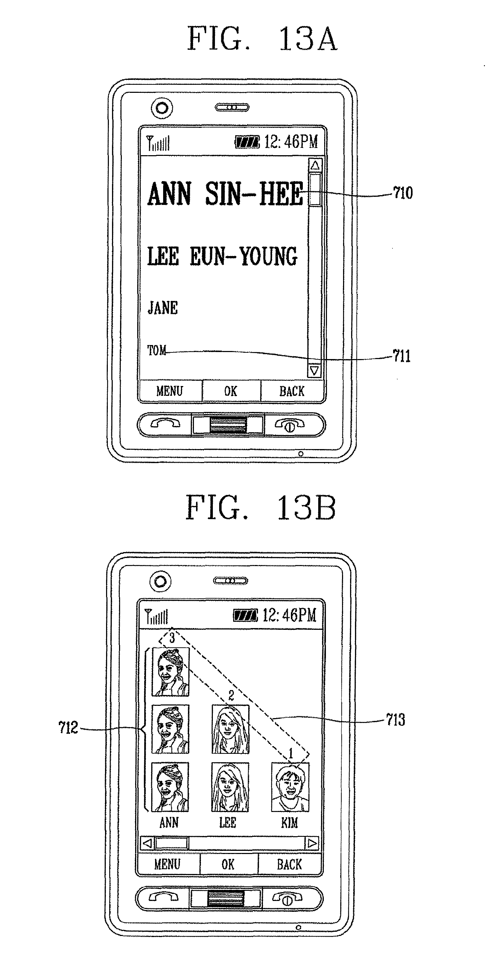

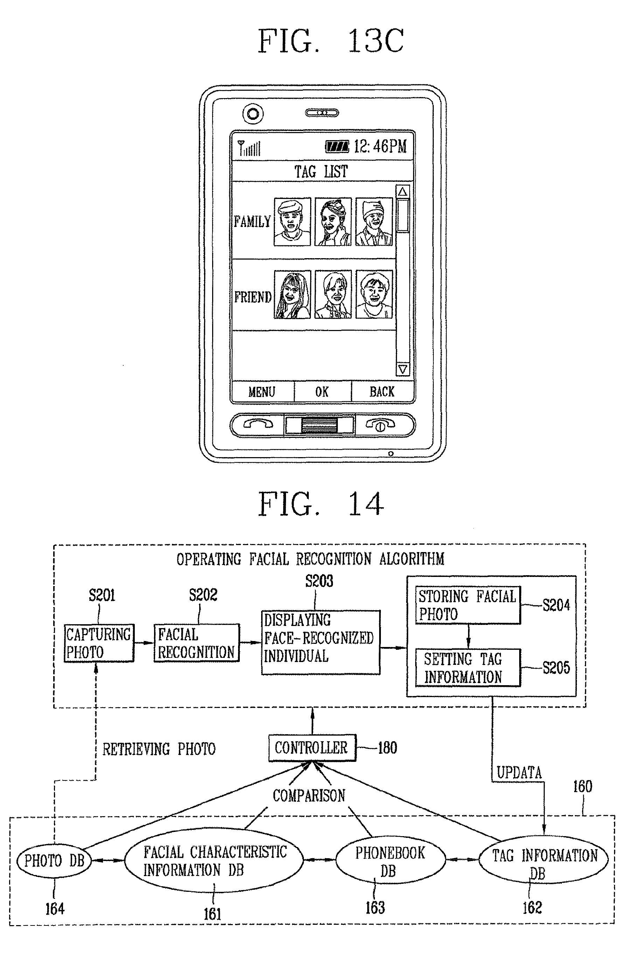

Figures 13A and 13C are exemplary views showing a method for displaying a tag list for recognized individuals in the portable terminal according to the present invention.

As described above, the controller 180 may set a priority of intimacy-related information for each person according to the preset setting option. For instance, a person having a high degree of intimacy may have a higher priority. In addition, information associated with each person may be displayed differently according to the set priority.

Referring to Fig. 13A, each contact information may have a different size to be displayed relatively larger or smaller 710, 711. Each contact information may be displayed relatively brighter or darker. In addition, transparency of each contact information may be adjusted. That is, the lower the degree of intimacy, the dimmer the contact information is displayed, and the higher the degree of intimacy, the clearer the contact information is displayed.

Referring to Fig. 13B, intimacy-related information 713 for each person may be additionally displayed. The intimacy-related information may be displayed in numbers, percentages, images or graphs. Here, facial photos 712 in a thumbnail view may be additionally provided as the intimacy-related information.

Referring to Fig. 13C, the intimacy-related information may be displayed in groups. For instance, intimacy-related information for a family, friends, coworkers, or customers may be separately displayed.

Here, even when the photo list is displayed, the controller 180 may execute a variety of functions provided in the portable terminal for a certain individual selected by the user.

The functions of the photo list which displays the intimacy-related information about face-recognized individuals in the portable terminal have been described.

The tag information related to the facial photos of each person may be set to have a lock function. Considering that the lock function for the tag information is separately set to the tag information only, it is different from a lock function applied to all settings of the portable terminal. If the tag information lock function is thusly set, all functions of the portable terminal except the facial recognition function for captured images can be executed, and tag information regarding a photo which is already face-recognized is not displayed. That is, the use of all functions related to the above-described facial recognition (e.g., phonebook/ original photo viewing/ call information viewing/ call connection/ message transmission/ photo transmission/ file transmission/ conference call/ photo diary/event, schedule registration/ idle screen setting, and the like) may be restricted. The user may manually set the tag information lock function through the setting option.

Figure 14 is an exemplary view showing a schematic view of a database referred for tag information management of face-recognized individuals in the portable terminal according to the present invention.

Referring to the drawing, the portable terminal according to the present invention may include, as database used for a facial recognition function, a first database (161, facial characteristic information database) for storing facial characteristic information on each person, a second database (162, tag information database) for storing tag information for each of the face-recognized individuals (e.g., information related to an original photo, information associated with a certain function provided in the terminal), a third database (163, phonebook information database) associated with the first and second database, storing and referring to names and contact information about each contact stored in a phonebook, and a fourth database (164, photo database) associated with the first, second and third database, and storing an original photo including the face-recognized individuals and facial photos captured in the original photo.

Each database 161∼164 can be stored in the memory 160.

When the facial recognition algorithm is executed, the controller 180 may refer to a database corresponding to a respective operation. For instance, the user may input a certain command so as to retrieve a photo pre-stored in the photo database 164, or to operate the facial recognition function on photos/videos that are currently being captured or during the video call (S201).

According to the user's command, the controller 180 operates the facial recognition function by using the facial recognition algorithm stored in the memory 160 (S202).

The controller 180 may refer to a facial characteristic information database 161 for the facial recognition. The facial characteristic information database 161 is associated with the tag information database 162 and the phonebook information database 163. Accordingly, when the face-recognized individual is to be displayed, the controller 180 may display the face-recognized individual together with the tag information of the individual (e.g., name and contact information) (S203).

The user may store the facial photo information for each of the face-recognized individuals, and the facial photo information on each individual can be continuously added and stored (S204). In addition, the original photo information associated with each person (e.g., a file name of the original photo, a group storing the original photo) may be stored. The controller 180 may control the photo database 164 and the facial characteristic information database 161 so as to update the photo information.

In addition, when the facial photos are stored, tag information for the facial photos may be set. In order to set such tag information, the controller 180 searches the preset tag information. If the pre-stored tag information for a new contact is present, tag information is automatically set by using the pre-stored tag information. If the pre-stored tag information for a new contact is not present, the user may manually input and set tag information for the new contact (S205).

The order of performing the operation of storing the facial photos and the operation of setting the tag information may be changed.

The controller 180 may store the facial characteristic information for the new contact and its tag information, respectively into the facial characteristic information database 161 and the tag information database 162 for future reference.

In addition, a medium for recording a program can be implemented as a code that can be read by a computer. The medium that can be read by a computer includes all types of recording devices for storing data such as a ROM, a RAM, a CD-ROM, a magnetic tape, a floppy disk, and an optical data storing device. The medium can be also implemented as a carrier wave (e.g., a data transmission through the Internet). The computer may include the controller 180 of the portable terminal.

It will be apparent to those skilled in the art that various modifications and variations can be made in the present invention without departing from the spirit or scope of the invention. Thus, it is intended that the present invention covers the modifications and variations of this invention provided they come within the scope of the appended claims and their equivalents.

## Claims

1. A portable terminal, comprising:
a display module configured to display still images or videos; and
a controller operatively connected to the display module and configured to display all individuals captured in the still images or videos by using an image of a certain shape, and indicating whether or not a preset tag of information for each individual is present according to a preset option.

2. The portable terminal of claim 1, wherein the controller is configured to
receive facial images of selected individuals and display the facial images on an idle screen display, and
receive at least one of the facial images displayed on the idle screen display, move a position of the at least one in a drag-and-drop manner and display the position.

3. The portable terminal of claim 2, wherein, if a facial image of a certain individual is consecutively touched more than twice, if the facial image of the certain individual is touched for longer than a preset period of time, or if the facial image of the certain individual is moved to be overlaid with a certain function icon or menu by dragging-and-dropping or flicking,
the controller is configured to directly execute a preset certain function on the idle screen display, or display a popup menu on the idle screen display and then directly execute a function selected among the popup menu on the idle screen display.

4. The portable terminal of claim 1, further comprising:
a memory having at least one of a first database for storing facial characteristic information for each of the individuals;
a second database storing tag information for each of the face-recognized individuals;
a third database associated with the first and second database, and storing and referring to names and contact information of each individual; and
a fourth database associated with the first, second and third database, and storing an original image including the face-recognized individuals and facial images captured on the original image.

5. The portable terminal of claim 1, wherein the controller is configured to use information regarding the number of still images or videos for each individual, frequency of image capturing or the number of times of executing functions for each individual to determine a degree of intimacy with the user, and to store such information in the memory for management.

6. The portable terminal of claim 1, wherein the controller is configured to cause the display module to display a facial portion of each individual by using a facial contour or a certain image of a circular or polygonal shape in order to identify each individual.

7. The portable terminal of claim 6, wherein the controller is configured to
select or deselect facial images of each individual by receiving an inputting of a key manipulation, touch or voice from the user, and
apply a special effect comprising one of changing a shape and color of the certain image or flashing, to the facial images to distinguish a corresponding selected and deselected state.

8. The portable terminal of claim 1, wherein the controller is configured to use an image of a certain shape to display whether or not preset tag information for each of the individuals is present, and, if the preset tag information for each individual is present, to cause the display module to further display at least one item of tag information.

9. An image information managing method for a portable terminal, comprising:
recognizing faces of individuals captured in still images or videos;
displaying each face of the face-recognized individuals by using an image of a certain shape;
searching whether or not a preset tag of information for each individual is present; and
displaying whether or not the preset tag for each individual is present.

10. The image information managing method of claim 9, wherein the step of displaying each face of the individuals comprises:
displaying each face of the individuals on the still images or videos by using a frame having a certain shape, or
displaying a list of photos capturing each individual on a separate screen display, and
wherein the certain shape is a circular or polygonal frame enclosing each individual of the recognized faces, or a shape enclosing a facial contour.

11. The image information managing method of claim 10, further comprising:
selecting or deselecting each of the face-recognized individuals upon receiving one of a user's key manipulation, touch input or voice input, and
displaying a selected or deselected state of each of the face-recognized individuals by using the certain shape.

12. The image information managing method of claim 9, wherein the tag information is information about still images or videos of the face-recognized individuals, and comprises a file name, captured position information of each individual, and at least one of contact information and name information of each individual, phonebook information, group information, date information, and event information.

13. The image information managing method of claim 9, further comprising:
determining a degree of intimacy with a user and each of the face-recognized individuals; and
displaying the degree of intimacy of each individual on a certain menu,
wherein the degree of intimacy is determined by using information such as a number of captured images or videos, frequency of image capturing or a number of times of executing a certain function for each individual.

14. The image information managing method of claim 13, further comprising:
displaying intimacy-related information of each of the individuals by using a number, percentage, the number of images or a graph,
setting a priority of each individual by the degree of intimacy,
displaying each contact information relatively larger or smaller according to the priority,
displaying contact information relatively brighter or darker, or
displaying each contact information relatively clearer or dimmer.

15. The image information managing method of claim 9, further comprising:
setting a lock function to restrict a display of tag information set to the facial images of each individual, and to restrict a function to be executed for facial images of selected individuals.
